# EUROPÄISCHE PATENTANMELDUNG

(11) **EP 0 692 516 A1**
(43) Veröffentlichungstag der Anmeldung: **17.01.1996**
(21) Anmeldenummer: 94111016.5
(22) Anmeldetag: 15.07.1994
(51) Int. Cl.: C08J 9/32, A43B 13/04

(54) **Massgenauer thermoplastischer syntaktischer Schaum**

(71) Anmelder: Burger, Hans-Joachim, D-92245 Kümmersbruck (DE)
(72) Erfinder: Burger, Hans-Joachim, D-92245 Kümmersbruck (DE)

(57) **Zusammenfassung**

Maßgenauer thermoplastischer Doppelschaum, dadurch gekennzeichnet, daß durch mindestens zwei unabhängig voneinander ablaufende Schäumprozesse ein feinporiger und leichter, weder einfallender noch nachtreibender warmformbarer Schaum entsteht, der auch aus Alt- und Abfallteilen mäßig warm reformierbar ist.

## Beschreibung

Nach dem Stand der Technik werden thermoplastische Schäume als Blöcke, Platten oder Formteile mittels Pressen, Extrudern oder Spritzgießmaschinen derart hergestellt, daß eingespeiste Gase oder gasende Zusätze die mittels Wärme aufgeschmolzenen Thermoplaste aufschäumen. Schaumstruktur, Porengröße, Zellenart, Dichte und sonstige physikalische Eigenschaften sind in weiten Grenzen variabel und abhängig von Schmelzviskositäten, Gasdruck, Gasausbeute, Expansionsvolumen u.a.m.

Die in der Praxis gleichmäßigsten und feinporigsten Schaumstrukturen (z.B. bei Schuhsohlen) werden derzeit erreicht, wenn die durch Gase geschäumte Schmelze in heißen Werkzeugen bei der Formgebung peroxidisch vernetzt werden. Dabei ergeben sich zwei grundsätzliche Nachteile:
1. Die zur Vernetzung notwendige Zeitspanne erzwingt einen langen Herstellzyklus (z.B. 7 bis 12 Minuten bei Schuhsohlen oder Ballonrädern) und
2. In heißen Formen vernetzende Thermoplastschäume z. B. aus Ethylen-Vinylacetat-Copolymeren oder Polyurethanen expandieren durch inneren Restgasdruck nach dem Entformen beträchtlich um z.B. 15 bis 35 %. Das bedingt, daß die sehr stark verkleinerten Formen durch Versuche zu den Wunschmaßen korrigiert werden müssen. Auch dann sind die erreichbaren Maßtoleranzen meist so groß, daß eine ausschußarme Produktion nicht gewährleistet ist.

Eine andere Art des thermoplastischen Schäumens ist das Spritzen der begasten Schmelze in kalte Formen ohne peroxidische Vernetzung. Hierbei reduziert sich der Zyklus um 50 bis 70 %, und die Teile sind maßhaltig, jedoch ist die Schaumstruktur meist völlig unbefriedigend.

Alle aufgeführten Probleme können mit der erfindungsgemäßen Rezeptur und der zugehörigen Technologie auf einfache und wirtschaftliche Weise gelöst werden.

Der als Produktbezeichnung gewählte Begriff Doppelschaum leitet sich davon ab, daß mindestens zwei getrennt voneinander ablaufende Schäumprozesse stattfinden: Ein durch Wärme gasendes eingearbeitetes oder aufgetrommeltes chemisches Treibmittel in einer Thermoplastschmelze bewirkt bei entsprechender Temperatur einen Bläheffekt, der wie bekannt einen Schaum erzeugt. Parallel dazu expandieren z.B. bei ähnlichem Temperatur-Niveau auch in den Thermoplasten eingearbeitete oder aufgetrommelte sogenannte Microballons zu eigenhäutigen, winzigen gasgefüllten Ballons. Handelsübliche Produkte können Häute haben aus Polyvinylidenfluorid, Polyvinylidenchlorid, Polymethylmetacrylat, Polyacrylnitril u.ä.

Um feinstrukturierte leichte Schäume zu erzeugen, sind die Komponenten so zu wählen, daß mit einigen Überschneidungen als erstes das aufzuschäumende Grundpolymer schmilzt, dann die Treibmittel gasen, etwa gleichzeitig die Microballonhäute erweichen und die Microballons expandieren.

Spezielle Rezepturen ermöglichen eine kontinuierliche oder diskontinuierliche Produktion von Platten oder Formteilen besonders hoher Qualität, was folgendermaßen erklärbar und in geeignetem Mikroskop sichtbar ist:
Heiße thermoplastische unvernetzte Schaumschmelze neigt temperatur-, zeit- und viscositätsabhängig zum Zusammenbruch, so daß aus vielen Zellen ungleichmäßige Löcher im Schaum entstehen. Da die zur Erstarrung der Schmelze notwendige Wärmeabfuhr aus Schaum ungünstig ist, sind besonders dicke Stellen wegen der lange anstehenden Temperatur störungsgefährdet. Die erfindungsgemäß eingebrachten Microballons haben in geblähtem Zustand elastische (aber stabile) Häute mit erhöhtem Schmelzpunkt, so daß diese Microballons ein Stützgerüst für den Schaum darstellen. Andererseits haben brauchbare Werkstoffe, die nur mit Microballons versetzt sind, keine Dichten unter ca. 0,45 g/cm³, da bekanntlich die Zwickel in einer Kugelpackung ca. 35% eines Gesamtvolumens ausmachen, und anzunehmen ist, daß im Normalfall diese Zwickel mit weitgehend kompakter Schmelze gefüllt sind.

Erst die erfindungsgemäße Kombination von Hohlkugeln mit Schaum ermöglicht Dichten bis ca. 0,1 g/cm³ mit den angeführten Vorteilen hinsichtlich Schaumstabilität und Struktur bei hohen Zähigkeiten, die bei thermoplastischen Elastomeren oft charakteristisch sind. Die Doppelschaumbildung in einem Arbeitsgang gepaart mit hoher Abbildungsgenauigkeit in relativ kurzen Herstellzyklen sind von hoher Wirtschaftlichkeit und bisher unbekannter technischer Qualität. Deshalb sind Anwendungen in der Schuhindustrie, der Orthopädie, der Sportartikelindustrie, der Spielwarenindustrie, der Autoindustrie, der Elektronik, der Sicherheitstechnik und vielem anderen möglich.

Rezepturbeispiel für Schuhaufbausohlen und Ausführungstechnologie:
100,0 GT Ethylenvinylacetat-Copolymer
mit einem Vinylanteil von 28 GT,
einem Schmelzpunkt von ca. 90°C,
einer Schmelzviscosität von 8 g/10 Min. und
einer Härte von 80 Shore A
werden in einer Mischtrommel bei Raumtemperatur mit
0,5 GT Weißöl oberflächlich leicht klebrig gemacht;
10,0 GT Treibmittel Acodicabonamid-Pulver
mit einer Aufschäumtemperatur von ca. 120°C und
10,0 GT Microballon Schaumkonzentrat auf Acrylnitrilbasis
mit einer Aufschäumtemperatur von ca. 130°C
werden bei Raumtemperatur intensiv zu einer verarbeitungsfertigen lagerfähigen Mischung aufbereitet.

Solcherart Rezepturen sind stark variabel und können auch mit Antistatika, Farbstoffen u.ä. versetzt werden.

Zur Herstellung von z.B. orthopädischen Aufbausohlen wird die beschriebene Mischung in eine Spritzgießmaschine gegeben, die das notwendige Volumen bei ca. 130°C aufschmilzt, homogenisiert und nach dem Öffnen einer Verschlußdüse in das auf ca. 2°C gekühlte Werkzeug einspritzt.

Eine andere praktikable Möglichkeit ist, beschriebene Mischung in einem Extruder aufzuarbeiten, über eine Strangdüse als Band oder Schnur zu fördern, ein entsprechendes Stück abzuschneiden, dieses in eine offene Form zu legen und sie zur Formung und Abkühlung zu schließen. Besonders bei leichten Schäumen ist diese Methode wegen Vermeidung strukturschädigender Scherung zu empfehlen.

Im Extruder und/oder unmittelbar beim Verlassen der Düse expandiert die Masse zu Doppelschaum, der im formgebenden Werkzeug erstarrt. Bei maximalen Wanddicken von ca. 30 mm liegt die zyklusbestimmende Abkühlzeit bei ca. 2,5 Minuten. Wenn in der Aufbereitungsmaschine, z.B. einer Schneckenspritzgießmaschine oder einem Extruder, eine Mindestaufschäumzeit und Mindestaufschäumtemperatur (z.B. 2 Minuten bei 130°C) eingewirkt hat, kann die Masse innerhalb der Maschine oder außerhalb der Maschine auf wenig über die Schmelztemperatur der thermoplastischen Grundkomponente abgesenkt und (z.B. in einem Wärmeschrank) über Stunden verformungsplastisch bei z.B. 100°C bereitgehalten werden.

Es ist auch möglich, abgekühlte und portionierte Stücke der Schaummasse im Wärmeschrank wieder auf Verformungstemperatur zu erwärmen und dann in kalte Formen beliebiger harter Werkstoffe (auch z.B. Holz oder Gips) einzudrücken.

Die einfach rezeptierbare hohe Klebrigkeit des erfindungsgemäßen Doppelschaums kann neben pastös dickenausgleichenden Verklebungen beispielsweise auch genutzt werden, um einen gesamten Schuhaufbau durch formendes verbindendes Zusammenpressen einschließlich Innensohlen, Brandsohlen, Laufsohlen und Einlagen höchst einfach und wirtschaftlich auch im Handwerksbetrieb durchzuführen.

Im medizinisch-orthopädischen Bereich können Doppelschaumbänder etc. als anformbare, leichte Stütz- oder Korrekturschienen und -elemente fast ohne Aufwand angepaßt werden.

Die gute Anpaßmöglichkeit ist auch nutzbar, leichte und hautsympathische Halteelemente im Behindertenbereich zu formen.

Desweiteren kann der erfindungsgemäße Doppelschaum nach der beschriebenen Aufbereitung zu Stangen unterschiedlicher Querschnitte geformt werden. Solcherart lagerfähiger Vorprodukte können z.B. in beheizten Ausdrückgeräten plastifizierbar temperiert werden, um z.B. als Dichtprofile in Gehäuse eingespritzt zu werden. Im Gegensatz zu anderen bekannten Schäumen können hier die kritischen Anfangs- und Endverbindungen mechanisch leicht nachgeformt werden. Auf ähnlich Weise können auch Hohlräume mit beschriebener Schaummasse gefüllt werden, wobei die mäßige Formungstemperatur, das gute Haftvermögen, der niedrige tang.δ , die Wasserdichtigkeit und Tieftemperatur-Elastizität auch im Elektronikbereich einen höchst effektiven Einsatz darstellt.

Bei entsprechender Auswahl der Komponenten kann der erfindungsgemäße Schaum auch besonders leicht recyclefähig und umweltfreundlich rezeptiert werden. Ausschuß-, Rest- und Altteile können nach Wiedererwärmung neu formgestaltet werden.

Sollen Rückstellkräfte, Temperaturverhalten u.ä. verbessert werden, kann dieser Doppelschaum ohne oder mit Vernetzungshilfsmitteln durch entsprechende Gamma-Bestrahlung wirtschaflich so verändert werden, daß dieser Doppelschaum einem bei der Herstellung peroxidisch vernetzten System physikalisch gleichkommt.

## Patentansprüche

1. Maßgenauer thermoplastischer Doppelschaum, dessen Schaumstruktur bei wirtschaftlicher Herstellung weder zusammenbricht, noch maßverändert nachexpandiert;

2. Maßgenauer thermoplastischer Doppelschaum nach Anspruch 1, dadurch gekennzeichnet, daß handelsüblichen Schaumformulierungen ein zusätzlich expandierendes microballonbildendes Schaumkonzentrat beigegeben wird;

3. Maßgenauer thermoplastischer Doppelschaum nach Anspruch 1, dadurch gekennzeichnet, daß als Basismasse ein Ethylen-Vinylacetat-Copolymer, ein thermoplastisches Polyurethan, ein Styrol-ethylen-butylen-styrol oder ein ähnlicher thermoplastischer Gummi (TR = thermoplastic rubber) verwendet wird;

4. Maßgenauer thermoplastischer Doppelschaum nach Anspruch 2, dadurch gekennzeichnet, daß bei einem der beiden Treibmittelkomponenten ein handelsübliches Treibmittel in trockenener Konsistenz z.B. auf Basis Azodicarbonamid oder in flüssiger Form z.B. auf Basis Freon-Fluorkarbon verwendet wird;

5. Maßgenauer thermoplastischer Doppelschaum nach Anspruch 2, dadurch gekennzeichnet, daß als zweite Treibmittelkomponente ein nicht expandiertes Schaumkonzentrat auf Basis Polyvinylidenfluorid, Polyvinylidenchlorid, Polyacrylnitril o.ä. verwendet wird, dadurch gekennzeichnet, daß diese Komponente bei höherer Temperatur z.B. 130°C eigenhautbildende Mikrohohlkugeln ergeben, die hohle Stützgerüste in der Polymerschmelze darstellen;

6. Maßgenauer thermoplastischer Doppelschaum nach Anspruch 1, dadurch gekennzeichnet, daß die nach Anspruch 2 bis 5 formulierte Schaummasse entweder in gekühlte Werkzeuge zur Formgebung eingespritzt oder eingelegt wird oder aus Formdüsen zu Profilen oder Platten ausgestoßen wird;

7. Maßgenauer thermoplastischer Doppelschaum nach Anspruch 2 bis 5, dadurch gekennzeichnet, daß die in Anspruch 6 hergestellten Formteile nachträglich mittels Gammastrahlen physikalisch vernetzt werden.

8. Maßgenauer thermoplastischer Doppelschaum nach Anspruch 2 bis 5, dadurch gekennzeichnet, daß Ausschußteile, Restteile oder Altteile nach Wiedererwärmung neu formgestaltet werden können.
